# EUROPÄISCHE PATENTANMELDUNG

(11) **EP 0 782 819 A1**
(43) Veröffentlichungstag der Anmeldung: **09.07.1997**
(21) Anmeldenummer: 96120057.3
(22) Anmeldetag: 13.12.1996
(51) Int. Cl.: A01D 34/62

(54) **Verfahren zum Einstellen einer Messerspindel eines Spindelmähers**

(30) Priorität: 04.01.1996 US 582829
(71) Anmelder: DEERE & COMPANY, Moline Illinois 61265-8098 (US)
(72) Erfinder: Hartwig, Robert Frederick, Horicon, Wisconsin 53032 (US)
(74) Vertreter: Feldmann, Bernhard

(57) **Zusammenfassung**

Ein Verfahren zum Einstellen der eine motorgetriebene Zentralwelle (36) aufweisenden Messerspindel (14) einer Spindelmähereinheit (10) ist durch die nachfolgenden Verfahrensschritte gekennzeichnet: Demontage des Motors von dem Rahmen (12) der Spindelmähereinheit (10), Einstellen der Messerspindel (14) gegenüber dem Untermesser (16), Aufstecken einer Kurbel (42) auf das Ende der Zentralwelle (36) der Messerspindel (14), Drehen der Kurbel (42) und damit der Messerspindel (14) zum Überprüfen der vorschriftsmäßigen Einstellung und Nachstellung der Messerspindel und Drehen der Kurbel falls eine vorschriftsmäßige Einstellung noch nicht erreicht war.

## Beschreibung

Die Erfindung bezieht sich auf ein Verfahren zum Einstellen der eine motorgetriebene Zentralwelle aufweisenden Messerspindel einer Spindelmähereinheit.

Herkömmliche Mäher zum Mähen von großen Rasenflächen sind als selbstfahrende Fahrzeuge in Form von Kleinschleppern oder Aufsitzmähern ausgebildet und tragen Mähwerke in Form von Sichelmähern oder Spindelmähern. Mit Spindelmähern lässt sich ein äußerst präziser Rasenschnitt ausführen, wie er auf Golfplätzen zum Beispiel unerlasslich ist. Hierzu weisen die in der Regel über einen Hydraulikmotor angetriebenen Spindelmäher eine Messerspindel und ein in Bodennähe angeordnetes gerades Untermesser auf. Um einen hervorragenden Rasenschnitt zu erhalten, ist die richtige Einstellung der Messerspindel gegenüber dem Untermesser besonders wichtig. Dies muß insbesondere nach einem Nachschleifen der Messer der Messerspindel von der Bedienungsperson überprüft werden, was normalerweise dadurch erfolgte, daß die Bedienungsperson zwischen Messerspindel und Untermesser ein Blatt Papier halt, über das, wenn es sauber geschnitten wird, auf eine richtige Einstellung geschlossen werden kann. Wird das Papier nicht oder unsauber geschnitten, so ist die Messerspindel nochmals nachzustellen. Das Papier kann allerdings nur bei sich drehender Messerspindel geschnitten werden, wozu die Bedienungsperson bisher die Messerspindel von Hand in Drehung versetzen musste. Hierzu musste die Bedienungsperson die scharfen Messer der Spindel anfassen, so daß Verletzungen nicht ausgeschlossen werden konnten.

Nach der Erfindung soll dies vermieden werden, weshalb erfindungsgemäß nach der Demontage des Motors von dem Rahmen der Spindelmähereinheit von der Bedienungsperson zunächst die Messerspindel gegenüber dem Untermesser eingestelt wird und danach eine Kurbel auf das Ende der Zenralwelle der Messerspindel aufgesteckt wird. Durch Drehen der Kurbel und damit der Messerspindel kann dann, ohne die Messerspindel anfassen zu müssen, die vorschriftsmäßige Einstellung überprüft werden. Eine Nachstellung der Messerspindel und Drehen der Kurbel wird erneut erforderlich, falls eine vorschriftsmäßige Einstellung noch nicht erreicht war. Bei einem solchen Verfahren setzt sich die Bedienungsperson keiner Verletzungsgefahr aus.

Die Vorrichtung zum Durchführen dieses Verfahrens sieht vor, daß zwischen der Ausgangswelle des abnehmbaren Motors zum Antreiben der Messerspindel und der Zentralwelle der Messerspindel ein Kupplungsstück vorgesehen ist, das ein auf die Zentralwelle aufsteckbares Ende mit einer profilierten Endbohrung aufweist, die einer Endbohrung in einer Kurbel entspricht. Auf diese Weise kann die Kurbel leicht auf das Ende der Zentralwelle aufgesteckt werden. Sobald sie gedreht wird, kann die richtige Einstellung der Messerspindel überprüft werden, ohne daß sich die Bedienungsperson einer möglichen Verletzungsgefahr aussetzt.

In der Zeichnung ist ein nachfolgend näher erläutertes Ausführungsbeispiel der Erfindung dargestellt. Es zeigt:

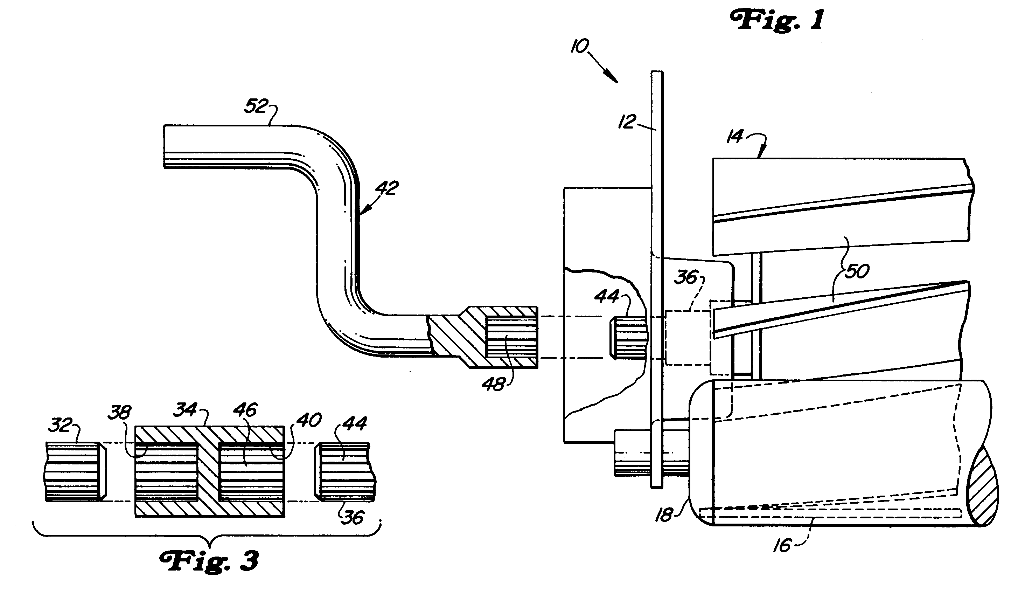

- Fig. 1:: eine nur teilweise dargestellte Messerspindel mit einer auffsteckbaren Kurbel zum Drehen,
- Fig. 2:: eine Spindelmähwerkeinheit in Seitenansicht und
- Fig. 3:: ein zwischen der Ausgangswelle von einem Motor und der Zentralwelle der Messerspindel einsetzbares Kupplungsstück.

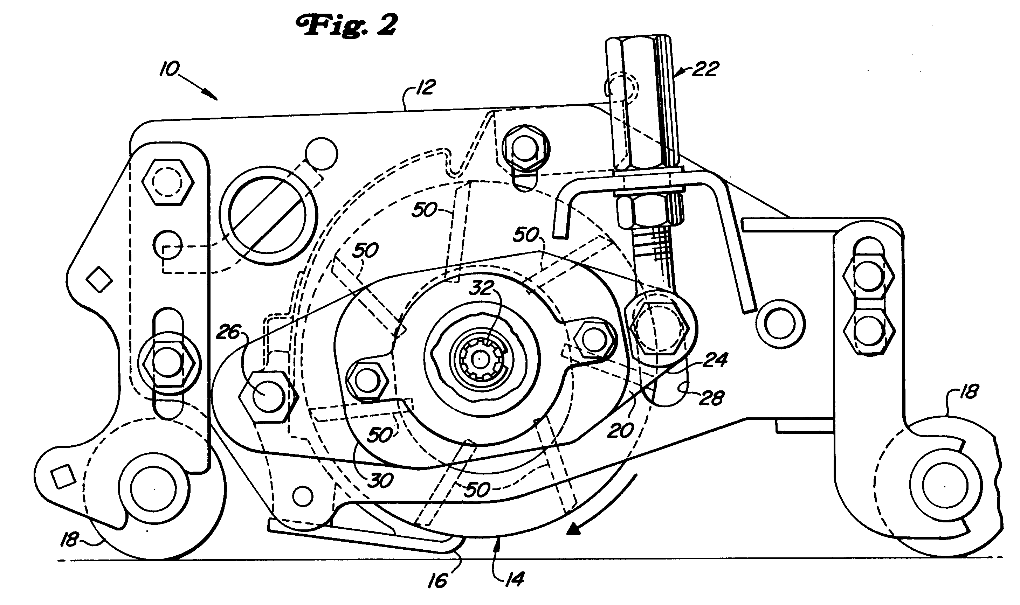

In Fig. 2 der Zeichnung ist eine herkömmliche Spindelmähereinheit 10 zu erkennen, wie sie an einem Kleinschlepper oder an einem Aufsitzrasenmäher verwendet wird. Jede Einheit weist einen Rahmen 12 auf, der die um eine horizontale Achse umlaufende Messerspindel 14 und das feststehende Untermesser 16 aufnimmt. Auf dem Boden laufende Rollen 18 sind ebenfalls an dem Rahmen 12 angeordnet. Das Untermesser 12 ist normalerweise ebenfalls mit dem Rahmen 12 fest verbunden. Die Spindel 14 dagegen ist verstellbar an den Rahmen 12 angeschlossen, und zwar derart, daß ihre Höhe mit Bezug auf das Untermesser eingestellt werden kann. Im einzelnen ist die Spindel 14 in einem Plattenteil 20 drehbar gelagert, der seinerseits an dem Rahmen 12 verstellbar angeordnet ist. Hierzu ist eine Verstellvorrichtung 22 vorgesehen, die es einer Bedienungsperson erlaubt, die Position des Plattenteils wahlweise zu verandern, wodurch die Stellung der Spindel 14 gegenüber dem Untermesser 16 geandert wird. Wenn die Bedienungsperson die Verstellvorrichtung 22 betätigt, kann der vordere Teil 24 des Plattenteils 20 um eine rückwärtige Schwenkstelle 26 nach oben oder nach unten verschwenkt werden. Ein gekrümmtes Langloch 28 ist in dem Rahmen 12 eingeformt und ermöglicht dem vorderen Teil 24 sich in dem Rahmen 14 nach oben und nach unten zu bewegen. Über die Verstellvorrichtung 22 ist der Plattenteil 20 und damit auch die Spindel 14 in der gewunschten oder ausgewählten Stellung festsetzbar. Der Antrieb der Spindel 14 erfolgt über einen Hydraulikmotor 30, der während des Mähbetriebes an den Plattenteil 20 angeschlossen ist. Der Motor 30 ist hydraulisch von einer Kraftquelle am Schlepper aus antreibbar und weist eine Ausgangswelle 32 mit einer äußeren Keilverzahnung auf. Ein Kupplungsstück 34 ist normalerweise zwischen der Ausgangswelle 32 und einer Zentralwelle 36 der Messerspindel 14 vorgesehen. Aus der Fig. 3 ist zu ersehen, daß das Kupplungsstück 34 an seiner einen Seite mit einer Bohrung 38 mit einer inneren Keilverzahnung, in die die Ausgangswelle 32 passt, und an seiner anderen Seite mit einer Bohrung 40 mit einer inneren Keilverzahnung 46 versehen ist, in die die Zentralwelle 36 passt. Diese ist hierzu mit einer äußeren Keilverzahnung 44 versehen. Aus Fig. 2 ist noch zu erkennen, daß der Hydraulikmotor 30 mit dem Plattenteil 20 verschraubt ist. Selbstverständlich sind auch andere Verbindungsmittel, wie beispielsweise ein Schnellverschluß möglich.

Die in Fig. 2 angedeutete Verstellvorrichtung für die Einstellung der Messerspindel mit Bezug auf das Untermesser ist ebenfalls herkommlicher Art und kann leicht durch andere Verstellvorrichtungen ersetzt werden.

Nachfolgend wird die Wirkungsweise des bevorzugten Ausführungsbeispiels naher beschrieben. Wenn die Bedienungsperson beabsichtigt, die Spindel gegenüber dem Untermesser neu einzustellen, muß sie das Fahrzeug anhalten, absteigen und sich zu der einzustellenden Schneideinheit hinbegeben. Im einzelnen wird danach zunächst die Verstelleinrichtung 22 betätigt, wodurch die Messerspindel entweder nach oben oder nach unten verschoben wird. Hierdurch wird der Abstand zu dem feststehenden Untermesser mehr oder weniger grob eingestellt. Nach dieser anfänglichen Einstellung sollte die Bedienungsperson feststellen und prüfen, ob die Spindel 14 mit Bezug auf das Untermesser 16 richtig eingestellt ist. Nach der Erfindung kann die Bedienungsperson hierzu zunächst den Hydraulikmotor 30 von dem Plattenteil 20 entfernen. Gleichfalls ist das Kupplungsstück 34 abzunehmen. Danach kann eine Kurbel 42 auf das Ende der Zentralwelle 36 aufgesteckt werden, wozu die Kurbel mit einer inneren Keilverzahnung 48 versehen ist, die der inneren Keilverzahnung 46 entspricht. Da die inneren und äußeren Keilverzahnungen 48 und 44 dann ineinander greifen, wird bei einem Drehen der Kurbel 42 die Messerspindel 14 entsprechend mitgedreht. Gegebenenfalls noch bei dem Drehen kann die Bedienungsperson zwischen die Messer 50 der Spindel 14 und das Untermesser 16 ein Blatt Papier schieben, um nun festzustellen, ob eine genaue Einstellung erfolgte. Wird dann bei drehender Spindel das Blatt Papier sauber geschnitten, so kann auf eine einwandfreie Einstellung der Spindel gegenüber dem Untermesser geschlossen werden. Wird dagegen das Papier nicht oder nicht sauber geschnitten, so muß die Verstellvorrichtung 22 wieder entsprechend betätigt werden. Selbstverständlich muß dies auch erfolgen, sollte bei einem Drehen der Spindel eines ihrer Messer gegen das Untermesser stoßen. Bei einer zweiten oder nochmaligen Betätigung der Verstellvorrichtung 22 muß naturlich die Prozedur mit dem Blatt Papier bei über den Handgriff 52 der Kurbel in Drehbewegung versetzter Spindel 14 wiederholt werden. Eine Nachstellung an der Verstellvorrichtung ist solange erforderlich, bis das Blatt Papier sauber geschnitten wird. Erst danach kann der Hydraulikmotor 30 und das Kupplungsstück 34 wieder befestigt werden.

Das vorliegende Verfahren hat unter anderem den Vorteil, daß die Bedienungsperson ihre Hand nicht unmittelbar in den Bereich der Spindel 14 oder deren Messer 50 halten muß. Ein Drehen der Spindel durch die Kurbel schließt damit die Gefahr aus, daß sich die Bedienungsperson bei einem Einstellen der Spindel eventuell an der Hand verletzt.

Der vorstehend beschriebene Einstellungsvorgang kann leicht bei einer an das Fahrzeug angebauten Schneideinheit 10 durchgeführt werden. Eine Neueinstellung von Spindel und Untermesser ist in der Regel immer dann erforderlich, wenn die Messer der Spindel geschliffen werden müssen. Bei einigen Typen kann dies bei an dem Fahrzeug verbleibender Schneideinheit erfolgen. Hierzu wird auf die Messer der Spindel ein Schleifmittel aufgetragen, und die Spindel wird langsam rückwärts gedreht. Bei anderen Typen wird die Schneideinheit abgebaut, wobei dann der Nachschleifvorgang auf einer Werkbank odgl. erfolgt. In solchen Fällen wird ein Motor an die Spindel angeschlossen, damit sie sich langsam rückwärts drehen kann. Andererseits kann die Spindel zum Schleifen auch über die Kurbel in Drehung versetzt werden. In jedem Fall wird aber die Kurbel zum Einstellen der Spindel gegenüber dem Untermesser eingesetzt.

## Patentansprüche

1. Verfahren zum Einstellen der eine motorgetriebene Zentralwelle (36) aufweisenden Messerspindel (14) einer Spindelmähereinheit (10) mit folgenden Schritten:
Demontage des Motors (30) von dem Rahmen (12) der Spindelmähereinheit (10),
Einstellen der Messerspindel (14) gegenüber dem Untermesser (16),
Aufstecken einer Kurbel (42) auf das Ende der Zentralwelle (36) der Messerspindel (14),
Drehen der Kurbel (42) und damit der Messerspindel (14) zum Überprüfen der vorschriftsmäßigen Einstellung und
Nachstellung der Messerspindel und Drehen der Kurbel falls eine vorschriftsmäßige Einstellung noch nicht erreicht war.

2. Vorrichtung zum Durchführen des Verfahrens nach Anspruch 1, dadurch gekennzeichnet, daß zwischen der Ausgangswelle (32) des abnehmbaren Motors (30) zum Antreiben der Messerspindel (14) und der Zentralwelle (36) der Messerspindel (14) ein Kupplungsstück (34) vorgesehen ist, das ein auf die Zentralwelle (36) aufsteckbares Ende mit einer profilierten Endbohrung (40) aufweist, die einer Endbohrung in einer Kurbel (42) entspricht.
